# FASCICULE DE BREVET EUROPEEN

(11) **EP 3 271 441 B1**
(45) Date de publication et mention de la délivrance du brevet: **04.09.2019**
(21) Numéro de dépôt: 16704649.9
(22) Date de dépôt: 16.02.2016
(51) Int. Cl.: C10G 65/00, C10G 65/12

(54) **PROCÉDÉ AMÉLIORÉ DE CONVERSION DE CHARGES HYDROCARBONNÉES LOURDES**
VERBESSERTES VERFAHREN ZUR UMWANLDUNG VON SCHWEREN KOHLENWASSERSTOFFEN
IMPROVED METHOD FOR CONVERTING HEAVY HYDROCARBON FEEDSTOCKS

(30) Priorité: 16.03.2015 FR 1552092
(43) Date de publication de la demande: 24.01.2018
(73) Titulaire: IFP Energies nouvelles, 92500 Rueil-Malmaison (FR)
(72) Inventeur: DREILLARD, Matthieu, 69003 Lyon (FR); FEUGNET, Frédéric, 69004 Lyon (FR); MARQUES, Joao, 38670 Chasse sur Rhône (FR); MOREL, Frédéric, 78400 Chatou (FR)
(74) Mandataire: IFP Energies nouvelles
(86) Numéro de dépôt international: PCT/EP2016/053255
(87) Numéro de publication internationale: WO 2016/146326

(56) Documents cités:
- EP-A1- 2 947 133
- WO-A2-2010/033487
- FR-A1- 2 753 984
- FR-A1- 2 764 902
- US-A- 4 521 295
- US-A1- 2004 163 996
- US-A1- 2012 168 350

## Description

### DOMAINE TECHNIQUE DE L'INVENTION

La présente invention concerne un procédé de conversion d'une charge lourde d'hydrocarbures avantageusement issue soit d'un pétrole brut, soit de la distillation atmosphérique et/ou sous vide d'un pétrole brut et contenant au moins 80% poids d'une fraction ayant une température initiale d'ébullition d'au moins 300 °C.

### ART ANTERIEUR

Plus précisément, les charges que l'on traite dans le cadre de la présente invention sont soit des pétroles bruts, soit des fractions lourdes d'hydrocarbures issues de la distillation atmosphérique et/ou sous vide d'un pétrole brut et contenant au moins 80% poids d'une fraction ayant une température initiale d'ébullition d'au moins 300 °C , de préfére nce d'au moins 350°C et de manière préférée d'au moins 375°C et de préférence des résidus sous vide contenant au moins 80% poids d'une fraction ayant une température initiale d'ébullition d'au moins 450 °C et de préférence d'au moins 500°C. Ces charges sont généralement des fractions d'hydrocarbures ayant une teneur en soufre d'au moins 0,1% en poids, de préférence d'au moins 1 % en poids et de manière préférée d'au moins 2 % en poids, une teneur en carbone Conradson d'au moins 3% poids et de préférence d'au moins 5% poids, une teneur en asphaltènes C₇ d'au moins 0,1% poids et de préférence d'au moins 3% poids et une teneur en métaux d'au moins 20 ppm et de préférence d'au moins 100 ppm.

La valorisation de ces résidus pétroliers est relativement difficile. En effet, le marché est surtout demandeur de carburants, distillables à pression atmosphérique à une température inférieure à 320°C voire 380°C. Les pétroles bruts sont caractérisés par des teneurs variables en résidus atmosphériques qui dépendent de l'origine des bruts traités. Cette teneur varie généralement entre 20 et 50% pour les bruts conventionnels, mais peut atteindre 50 à 80% pour les bruts lourds et extra-lourds comme par exemple ceux produits au Venezuela ou dans la région de l'Athabasca dans le nord du Canada. Il est donc nécessaire de convertir ces résidus, en transformant les molécules lourdes de résidus pour produire des produits raffinés constitués de molécules plus légères. Ces produits raffinés ont généralement un ratio hydrogène sur carbone plus élevé que les coupes lourdes de départ. Une série de procédés utilisés pour produire des coupes légères raffinées, comme les procédés d'hydrocraquage, d'hydrotraitement et d'hydroconversion, est donc basée sur l'ajout d'hydrogène dans les molécules, de préférence en même temps que le craquage de ces molécules lourdes.

La conversion des coupes lourdes dépend d'un grand nombre de paramètres tels que la composition de la charge, la technologie du réacteur utilisé, la sévérité des conditions opératoires (température, pression, pression partielle d'hydrogène, temps de séjour, ...), le type de catalyseur utilisé et son activité. En augmentant la sévérité de l'opération, la conversion des coupes lourdes en produits légers est augmentée, mais des sous-produits tels que des précurseurs de coke et des sédiments, commencent à être formés de façon significative via des réactions secondaires. La conversion poussée des charges lourdes résulte donc très souvent en une formation de particules solides (appelées sédiments), très visqueuses et/ou collantes composées par des asphaltènes, du coke et/ou des particules fines de catalyseur. La présence excessive de ces produits conduit ensuite à la désactivation du catalyseur, à l'encrassement des équipements du procédé, et notamment des équipements de séparation et de distillation. De ce fait, le raffineur est obligé de réduire la conversion des coupes lourdes afin d'éviter l'arrêt de l'unité d'hydroconversion.

La formation de ces sédiments dans des procédés d'hydroconversion dépend très fortement de la qualité de la charge et de la sévérité de l'opération. En effet, les asphaltènes présents dans la charge sont principalement convertis par désalkylation dans les conditions sévères d'hydroconversion et forment de ce fait des noyaux aromatiques très condensés qui rendent les effluents instables et qui précipitent sous forme de sédiments.

### OBJET ET INTERET DE L'INVENTION

Un des objectifs de l'invention est de fournir un schéma d'un procédé d'hydroconversion permettant d'améliorer la stabilité des effluents pour un niveau donné de conversion des coupes lourdes, et d'ainsi pouvoir augmenter la conversion par rapport aux procédés classiques d'hydroconversion.

Les schémas classiques d'hydroconversion des résidus tels que décrit dans les brevets US 4,521,295, US 4,495,060 ou US 4,457,831, préconisent une opération à des vitesses volumiques horaires (VVH) ou spatiale (débit volumique de charge par rapport au volume réactionnel) comprises entre 0.1 et 2.5 h⁻¹, des températures comprises entre 300-550°C et des pressions partielles d'hydrogène comprises entre 1000 et 5000 psig. Dans ces schémas, la température reste le paramètre clé pour maitriser le niveau de conversion des coupes lourdes. Pour une opération à forte conversion, une température élevée est ainsi préconisée pour augmenter le craquage thermique des coupes lourdes. Dans cette configuration le niveau maximum de conversion permettant une opération convenable d'une unité industrielle sera toujours limité par la formation de sédiments. En effet, la température augmente la cinétique des réactions de condensation/polymérisation plus rapidement que celle des réactions d'hydrogénation, provoquant ainsi des réactions secondaires et indésirables, responsables de la formation de sédiments et de précurseurs de coke.

Les brevets WO 2010/033487, US 2012/0168350, US 20040163996, FR 2 753 984 et FR 2 764 902 décrivent un procédé de conversion d'une charge lourde hydrocarbures.

Pour pallier cette limite d'opérabilité des unités d'hydroconversion, les schémas classiques de conversion de résidus de l'art antérieur peuvent intégrer des étapes supplémentaires comme le désasphaltage pour atteindre des niveaux de conversion supérieurs à sévérité réduite. C'est le cas du concept décrit dans les brevets US 2008/0083652, US 7,214,308, US 5,980,730. En effet, dans les schémas d'hydroconversion de résidus associant une unité de désasphaltage à une unité d'hydroconversion en lit fixe, en lit mobile, en lit bouillonnant et/ou en lit entrainé slurry, l'unité de désasphaltage peut être positionnée en amont selon la voie indirecte, comme par exemple dans le brevet US 7,214,308, ou en aval du procédé d'hydroconversion selon la voie directe, comme par exemple dans les brevets FR 2776297 et US 5,980,730. Les brevets FR 2776297, US 5,980,730 et US 7,214,308 décrivent en détail ces deux types de schéma de conversion possible.

Un schéma d'hydroconversion de résidus associe généralement deux principales étapes unitaires successives : une étape d'hydroconversion et une étape de désasphaltage, une distillation atmosphérique intermédiaire et éventuellement une distillation sous vide intermédiaire étant mises en oeuvre entre ces deux étapes unitaires. Généralement, des recyclages de l'huile désasphaltée (DAO) vers l'étape d'hydroconversion peuvent être mis en place dans ce type de schéma.

Les plus grandes limitations de ce type de schéma sont la quantité d'asphalte produite qui est difficile à valoriser; le recyclage de la coupe DAO à l'entrée de la zone de hydroconversion qui exige une augmentation importante du volume des zones réactionnelles ainsi que des zones de séparation (comme décrit dans les brevets US 2012/061292A et WO 14096591A1) augmentant l'investissement requis et le coût opératoire par rapport au procédé sans recyclage de DAO.

Des fluxants tels que des coupes aromatiques parmi lesquelles on peut citer de manière non exhaustive, les coupes LCO (Light cycle oil), HCO (heavy cycle oil) issus du procédé de craquage catalytique en lit fluidisé peuvent être utilisés afin de stabiliser les effluents des unités d'hydroconversion de résidus. Toutefois, leur utilisation impacte grandement la rentabilité du procédé dans la mesure où ces coupes ont un coût et que leur utilisation conduit à une augmentation de la taille des unités. De plus, ces coupes stabilisantes ne sont pas toujours disponibles sur le site et leur utilisation se fait nécessairement au détriment de la production d'une coupe valorisable. L'ensemble de ces raisons expliquent pourquoi l'utilisation de coupe stabilisante est très limitée.

Dans la présente invention, il est proposé d'améliorer simultanément le niveau de conversion et la stabilité des effluents liquides par un schéma de conversion des charges lourdes présentant un niveau thermique et un temps de séjour de la charge optimisés. Le procédé selon l'invention permet d'atteindre une conversion de la charge supérieure à celle obtenue par une configuration dite classique pour une stabilité des effluents liquides comparable. D'une autre manière, la présente invention peut également permettre de produire des effluents à un niveau de conversion identique qu'un procédé classique selon l'art antérieur mais avec une meilleure stabilité des effluents liquides produits.

### RESUME DE L'INVENTION

La présente invention concerne un procédé de conversion d'une charge lourde d'hydrocarbures, comprenant les étapes suivantes :
a) une étape d'hydroconversion de la charge lourde d'hydrocarbures en présence d'hydrogène dans au moins un ou plusieurs réacteurs triphasiques disposés en série ou en parallèle, contenant au moins un catalyseur d'hydroconversion, l'étape a) d'hydroconversion étant mise en oeuvre sous une pression absolue comprise entre 2 et 35 MPa, une température comprise entre 300 et 550 °C, et sous une quantité d'hydrogè ne mélangée avec la charge comprise entre 50 et 5000 Normaux mètres cube (Nm³) par mètre cube (m³) de charge, de manière à obtenir un effluent liquide à teneur réduite en Carbone Conradson, en métaux, en soufre et en azote,
b) une ou plusieurs étapes optionnelles de séparation de l'effluent issu de l'étape a) permettant d'obtenir au moins une fraction liquide légère bouillant à une température inférieure à 350°C et une fraction liquide lourde bouillant à une température supérieure à 350°C,
c) une étape d'hydroconversion de l'effluent liquide issu de l'étape d'hydroconversion a) dans le cas où l'étape b) de séparation n'est pas mise en oeuvre, ou de la fraction liquide lourde issue de l'étape de séparation b) lorsque ladite étape b) est mise en oeuvre, en présence d'hydrogène dans au moins un ou plusieurs réacteurs triphasiques disposés en série ou en parallèle, contenant au moins un catalyseur d'hydroconversion, l'étape c) d'hydroconversion étant mise en oeuvre sous une pression absolue comprise entre 2 et 38 MPa, à une température comprise entre 300 et 550 °C, et sous u ne quantité d'hydrogène comprise entre 50 et 5000 normaux mètres cube (Nm³) par mètre cube (m³) de charge liquide pris dans des conditions standards de température et pression,
   procédé dans lequel la vitesse spatiale horaire globale mise en oeuvre est comprise entre 0,05 et 0,09 h⁻¹ , et dans lequel le catalyseur d'hydroconversion de l'étape a) et de l'étape c) est un catalyseur comprenant un support alumine et au moins un métal du groupe VIII choisi parmi le nickel et le cobalt, ledit élément du groupe VIII étant utilisé en association avec au moins un métal du groupe VIB choisi parmi le molybdène et le tungstène, et est utilisé sous forme d'extrudés ou de billes.

Dans la présente invention, on entend par vitesse spatiale globale, la vitesse spatiale mise en oeuvre dans l'ensemble du schéma de procédé, c'est-à-dire prenant en compte l'ensemble des réacteurs mis en jeu dans le procédé dans les étapes a) et c).

Dans une mise en oeuvre, le procédé selon l'invention peut contenir plusieurs étapes d'hydroconversion, de préférence au moins deux étapes d'hydroconversion et plusieurs étapes optionnelles de séparation entre les étapes d'hydroconversion.

### DESCRIPTION DETAILLEE DE L'INVENTION

### La charge

La charge traitée dans le procédé selon l'invention est une charge lourde d'hydrocarbures (appelée résidu). Avantageusment, cette charge est une charge comprenant des fractions d'hydrocarbures produites dans la raffinerie. Les charges selon l'invention incluent des charges contenant des fractions d'hydrocarbures dont au moins 80 % poids ont une température d'ébullition supérieure à 300°C, des résidus atmosphériques et/ou des résidus sous vide, des résidus atmosphérique et/ou sous vide issues de l'hydrotraitement, de l'hydrocraquage et/ou de l'hydroconversion, des distillats sous vide frais ou raffinés, des coupes provenant d'une unité de craquage comme le FCC, le cokage ou la viscoréduction, des coupes aromatiques extraites d'une unité de production de lubrifiants, des huiles désasphaltées issues d'une unité de désasphaltage, des asphaltes issus d'une unité de désasphaltage ou des charges d'hydrocarbures similaires, ou une combinaison de ces charges fraiches et/ou des effluents raffinés. Ladite charge peut également contenir une fraction résiduelle issue de la liquéfaction directe de charbon (un résidu atmosphérique et/ou un résidu sous vide issu par exemple du procédé H-Coal™), un distillat sous vide issue de la liquéfaction directe de charbon, comme par exemple le procédé H-Coal™, des résidus de pyrolyse du charbon ou d'huiles de schiste, ou encore une fraction résiduelle issue de la liquéfaction directe de la biomasse lignocellulosique seule ou en mélange avec du charbon et/ou une fraction pétrolière fraîche et/ou raffinée.

De préférence, la charge traitée dans le cadre de la présente invention est constituée de fractions d'hydrocarbures issues d'un pétrole brut ou de la distillation atmosphérique d'un pétrole brut ou de la distillation sous vide d'un pétrole brut, lesdites charges contenant au moins 80% poids d'une fraction ayant une température d'ébullition initiale d'au moins 300°C, de préférence d'au moins 350°C et de manière préférée d'au moins 375°C et de manière plu s préférée des résidus sous vide ayant une température d'ébullition d'au moins 450°C, de préférence d'au moins 500°C et de manière préférée d'au moins 540°C.

Toutes ces charges citées ci-dessus contiennent des impuretés, comme des métaux, du soufre, de l'azote, du carbone de Conradson et des insolubles à l'heptane, également appelée asphaltènes C₇. Ces types de charges sont en effet généralement riches en impuretés avec des teneurs en métaux supérieurs à 20 ppm, de préférence supérieurs à 100 ppm. La teneur en soufre est supérieure à 0,1%, préférentiellement supérieure à 1%, et de préférence supérieure à 2% poids. Le taux d'asphaltènes C₇ s'élève au minimum à 0,1% poids et est de préférence supérieur à 3% poids. Les asphaltènes C₇ sont des composés connus pour inhiber la conversion de coupes résiduelles, à la fois par leur aptitude à former des résidus hydrocarbonés lourds, communément appelés coke, et par leur tendance à produire des sédiments qui limitent fortement l'opérabilité des unités d'hydrotraitement et d'hydroconversion. La teneur en carbone Conradson est supérieure à 3%, et de préférence d'au moins 5% poids. La teneur en carbone Conradson est définie par la norme ASTM D 482 et représente pour l'homme du métier une évaluation bien connue de la quantité de résidus de carbone produit après une pyrolyse sous des conditions standards de température et de pression.

### Etape a) d'hydroconversion

Conformément à l'invention, ladite charge lourde d'hydrocarbures est traitée dans une étape a) d'hydroconversion comprenant au moins un ou plusieurs réacteurs triphasiques disposés en série ou en parallèle. Ces réacteurs d'hydroconversion peuvent, entre autres, être des réacteurs de type lit fixe, lit mobile, lit bouillonnant, et/ou lit entrainé slurry, en fonction de la charge à traiter. De préférence, on utilise un réacteur de type lit bouillonnant. Dans cette étape, ladite charge est transformée dans des conditions spécifiques d'hydroconversion. L'étape a) est réalisée sous une pression absolue comprise entre 2 et 35 MPa, de préférence entre 5 et 25 MPa et de manière préférée, entre 6 et 20 MPa, à une température comprise entre 300 et 550°C et de préférence comprise entre 350 et 500°C et d'une manière préférée comprise entre 370 et 430°C, et d'une manière encore préférée comprise entre 380°C et 430°C. La quantité d'hydrogène mélangée à la charge est de préférence comprise entre 50 et 5000 normaux mètres cube (Nm³) par mètre cube (m³) de charge liquide pris dans des conditions standards de température et pression, de manière préférée entre 100 et 2000 Nm³/m³ et de manière très préférée entre 200 et 1000 Nm³/m³.

Cette première étape d'hydroconversion est avantageusement mise en oeuvre dans un ou plusieurs réacteurs triphasique d'hydroconversion, qui peuvent être en série et/ou en parallèle, utilisant avantageusement la technologie des réacteurs à lit bouillonnant. Cette étape est avantageusement mise en oeuvre à l'aide de la technologie et dans les conditions du procédé H-Oil™ tel que décrit par exemple dans les brevets US 4,521,295 ou US 4,495,060 ou US 4,457,831 ou dans l'article Aiche, March 19-23, 1995, Houston, Texas, paper number 46d, *"Second generation ebullated bed technology".* Dans cette mise en oeuvre, chaque réacteur est opéré en lit fluidisé triphasique, également appelé lit bouillonnant. Dans une des mises en oeuvre des réacteurs opérant en lit fluidisé, chaque réacteur comporte avantageusement une pompe de recirculation permettant le maintien du catalyseur en lit bouillonnant par recyclage continu d'au moins une partie d'une fraction liquide avantageusement soutirée en tête du réacteur et réinjecté en bas du réacteur.

Selon l'invention, le catalyseur d'hydroconversion de l'étape a) est un catalyseur comprenant un support alumine et au moins un metal du groupe VIII choisi parmi le nickel et le cobalt, de préférence le nickel, ledit élément du groupe VIII étant utilisé en association avec au moins un metal du groupe VIB choisi parmi le molybdène et le tungstène, de préférence, le métal du groupe VIB est le molybdène. De préférence, le catalyseur d'hydroconversion comprend le nickel en tant qu'élément du groupe VIII et le molybdène en tant qu'élément du groupe VIB. La teneur en nickel est avantageusement comprise entre 0,5 à 10 % exprimée en poids d'oxyde de nickel (NiO) et de préférence entre 1 à 6 % poids, et la teneur en molybdène est avantageusement comprise entre 1 et 30 % exprimée en poids de trioxyde de molybdène (MoO₃) et de préférence entre 4 et 20 % poids. Ce catalyseur est utilisé sous forme d'extrudés ou de billes.

Un type de catalyseur dit "slurry" selon la terminologie anglo-saxonne ou catalyseur entraîné peut être utilisé dans le procédé selon l'invention. Ledit catalyseur slurry présente une granulométrie et une densité adaptées à son entraînement. On entend par entraînement du catalyseur dispersé, sa mise en circulation dans le ou les réacteurs triphasiques par les flux liquides, ledit deuxième catalyseur circulant du bas vers le haut, avec la charge, dans le(s)dit(s) réacteurs triphasiques, et étant soutiré du ou desdits réacteurs triphasiques avec l'effluent liquide produit.

Dans une des mises en oeuvre du procédé selon l'invention, chaque réacteur de l'étape a) d'hydroconversion peut utiliser un catalyseur différent adapté à la charge qui est envoyée à ce réacteur. Dans une des mises en oeuvre du procédé selon l'invention, plusieurs types de catalyseur peuvent être utilisés dans chaque réacteur.

Le catalyseur d'hydroconversion usagé peut conformément au procédé selon l'invention être en partie remplacé par du catalyseur frais par soutirage, de préférence en bas du réacteur, et par introduction, soit en haut soit en bas du réacteur, de catalyseur frais et/ou de catalyseur usagé et/ou de catalyseur régénéré et/ou de catalyseur réjuvéné, de préférence à intervalle de temps régulier et de manière préférée par bouffée ou de façon quasi continue. Le remplacement de catalyseur peut être fait tout ou en partie par du catalyseur usagé et/ou régénéré et/ou réjuvéné issu du même réacteur et/ou d'un autre réacteur de n'importe quelle étape d'hydroconversion. Le catalyseur peut être ajouté avec les métaux sous forme d'oxydes de métaux, avec les métaux sous forme de sulfures de métaux, ou après un préconditionnement. Pour chaque réacteur, le taux de remplacement du catalyseur d'hydroconversion usé par du catalyseur frais est avantageusement compris entre 0,01 kilogramme et 10 kilogrammes par mètre cube de charge traitée, et de préférence entre 0,1 kilogramme et 3 kilogrammes par mètre cube de charge traitée. Ce soutirage et ce remplacement sont effectués à l'aide de dispositifs permettant avantageusement le fonctionnement continu de cette étape d'hydroconversion.

Il est également possible d'envoyer le catalyseur usé soutiré du réacteur dans une zone de régénération dans laquelle on élimine le carbone et le soufre qu'il renferme puis de renvoyer ce catalyseur régénéré dans l'étape d'hydroconversion. Il est également possible d'envoyer le catalyseur usé soutiré du réacteur dans une zone de réjuvénation dans laquelle on élimine la majeure partie des métaux déposés, avant d'envoyer le catalyseur usé et réjuvéné dans une zone de régénération dans laquelle on élimine le carbone et le soufre qu'il renferme puis de renvoyer ce catalyseur régénéré dans l'étape d'hydroconversion.

### b) Etape optionnelle de séparation

L'effluent issu de l'étape a) d'hydroconversion peut ensuite subir une ou plusieurs étape de séparation. Selon l'invention, cette séparation reste facultative, l'effluent de l'étape a) d'hydroconversion pouvant être envoyé directement vers l'étape c) d'hydroconversion.

Dans le cas où ladite étape de séparation est mise en oeuvre, au moins une partie de l'effluent issu de l'étape a) d'hydroconversion est envoyée à ladite étape de séparation.

Cette étape de séparation est réalisée avec l'objectif d'obtenir avantageusement au moins une fraction liquide dite légère bouillant majoritairement à une température inférieure à 350°C et au moins une fraction liquide dite lourde bouillant majoritairement à une température supérieure à 350°C.

La fraction liquide légère peut ensuite être envoyée au moins en partie à une section de fractionnement où elle est ensuite avantageusement séparée des gaz légers (H₂ et C₁pour obtenir la fraction liquide légère bouillant majoritairement à une température inférieure à 350°C, par tout moyen de séparation connu de l'homme du métier tel que par exemple par passage dans un ballon à détente brusque (ou ballon de flash selon la terminologie anglo-saxonne), de manière à récupérer l'hydrogène gazeux qui peut être avantageusement recyclé à l'entrée de l'étape a) d'hydroconversion. Ladite fraction liquide légère, avantageusement séparée desdits gaz légers et bouillant majoritairement à une température inférieure à 350°C contient les gaz légers dissouts, une fraction bouillant à une température inférieure à 150°C correspondant aux naphtas, une fraction bouillant entre 150 et 250°C correspondant à la fraction kérosène et au moins une partie de la fraction gazole bouillant entre 250 et 375°C. Ladite fraction liquide légère séparée de l'étape b) est avantageusement envoyée dans l'étape d) de fractionnement.

La fraction liquide lourde issue de l'étape b) de séparation bouillant majoritairement à une température supérieure à 350°C peut éventuellement contenir une partie de la fraction gazole bouillant entre 250 et 375°C, mais elle contient au moins une fraction bouillant entre 375 et 540°C appelée distillat sous vi de et une fraction bouillant à une température supérieure à 540°C, appelée résidu sous vide non converti. Cette fraction liquide lourde est ensuite envoyée au moins en partie vers l'étape c) d'hydroconversion, dans le cas où l'étape de séparation est mise en oeuvre.

L'étape de séparation peut être mise en oeuvre par tout moyen de séparation connu par l'homme du métier. De préférence, l'étape b) de séparation est réalisée par un ou plusieurs ballons de flash en série, et de manière préférée par un seul ballon de flash. De manière préférée, ce ballon de flash est opéré à une pression et une température proches des conditions opératoires du dernier réacteur de l'étape a) d'hydroconversion.

Dans une autre mise en oeuvre, l'étape de séparation est réalisée par un enchainement de plusieurs ballons de flash, opérant à des conditions opératoires différentes de celles du dernier réacteur de l'étape a) d'hydroconversion et permettant d'obtenir plusieurs fractions liquides légères, qui seront ensuite envoyées au moins en partie à une section de fractionnement, tandis que la fraction liquide lourde est ensuite envoyée au moins en partie vers l'étape c) d'hydroconversion selon l'invention.

Dans une autre mise en oeuvre, l'étape de séparation est réalisée par une ou plusieurs colonnes de strippage à la vapeur et/ou à l'hydrogène. Par ce moyen, l'effluent issu de l'étape a) d'hydroconversion sera séparé en une fraction liquide légère et une fraction liquide lourde, qui sera ensuite envoyée au moins en partie vers l'étape c) d'hydroconversion selon l'invention.

Dans une autre mise en oeuvre, l'étape de séparation est réalisée par une colonne de distillation atmosphérique séparant l'effluent issu de l'étape a) d'hydroconversion. La fraction liquide lourde récupérée en fond de la colonne de distillation atmosphérique peut ensuite être envoyée au moins en partie vers l'étape c) d'hydroconversion selon l'invention.

Dans une autre mise en oeuvre, l'étape de séparation est réalisée par une colonne de distillation atmosphérique séparant l'effluent issu de la première étape d'hydroconversion, suivie d'une colonne de distillation sous vide sur le résidu de la colonne de distillation atmosphérique. La fraction liquide lourde récupérée en fond de la colonne de distillation sous vide peut ensuite être envoyée au moins en partie vers l'étape c) d'hydroconversion selon l'invention.

L'étape de séparation peut également être constituée d'une combinaison de ces différentes mises en oeuvre décrites ci-dessus, dans un ordre différent de celui décrit ci-dessus.

Optionnellement, avant d'être envoyée vers l'étape c) d'hydroconversion selon l'invention, la fraction liquide lourde peut être soumise à une étape de strippage à la vapeur et/ou à l'hydrogène à l'aide d'une ou plusieurs colonnes de strippage. Cette étape permet d'éliminer au moins en partie la fraction distillat sous vide (hydrocarbures avec une température d'ébullition inférieure à 540°C) contenue dans la fraction liquide lourde.

### Etape c) d'hydroconversion

Conformément à l'invention, l'effluent liquide issu de l'étape d'hydroconversion a) dans le cas où l'étape b) de séparation n'est pas mise en oeuvre ou la fraction liquide lourde issue de l'étape de séparation b) lorsque celle-ci est mise en oeuvre est traitée dans l'étape c) d'hydroconversion.

Cette étape c) d'hydroconversion est composée d'un ou plusieurs réacteurs triphasiques, qui peuvent être en série et/ou en parallèle. Ces réacteurs d'hydroconversion peuvent, en autres, être des réacteurs de type lit fixe, lit mobile, lit bouillonnant, et/ou lit entrainé slurry, en fonction de la charge à traiter, notamment l'effluent issu de l'étape a) d'hydroconversion ou la fraction liquide lourde issue de l'étape b) de séparation. De préférence, on utilise un réacteur de type lit bouillonnant. Dans cette étape, la charge à traiter est généralement transformée dans des conditions classiques d'hydroconversion d'une fraction hydrocarbonée liquide. On opère habituellement sous une pression absolue comprise entre 2 et 35 MPa, de préférence entre 5 et 25 MPa et de manière préférée, entre 6 et 20 MPa, à une température comprise entre 300 et 550 °C, de préférence comprise entre 350 et 500°C et de manière préférée comprise entre 370 et 430°C. La quantité d'hydrogène mélangée à la charge à traiter est de préférence comprise entre 50 et 5000 normaux mètres cube (Nm³) par mètre cube (m³) de charge liquide prise dans des conditions standards de température et pression, et de manière préférée, entre 100 et 2000 Nm³/m³ et de manière très préférée entre 200 et 1000 Nm³/m³.

Cette étape c) d'hydroconversion est avantageusement mise en oeuvre dans un ou plusieurs réacteurs triphasiques d'hydroconversion, qui peuvent être en série et/ou en parallèle, utilisant la technologie des réacteurs à lit bouillonnant. Cette étape est avantageusement mise en oeuvre à l'aide de la technologie et dans les conditions du procédé H-Oil™ tel que décrit par exemple dans les brevets US 4,521,295 ou US 4,495,060 ou US 4,457,831 ou US 4,354,852 ou dans l'article Aiche, March 19-23, 1995, Houston, Texas, paper number 46d, "Second génération ebullated bed technology". Dans cette mise en oeuvre, chaque réacteur est opéré en lit fluidisé triphasique, également appelé lit bouillonnant. Dans une des mises en oeuvre des réacteurs opérant en lit fluidisé, chaque réacteur comporte avantageusement une pompe de recirculation permettant le maintien du catalyseur en lit bouillonnant par recyclage continu d'au moins une partie d'une fraction liquide avantageusement soutirée en tête du réacteur et réinjecté en bas du réacteur.

Selon l'invention, le catalyseur d'hydroconversion de l'étape c) est un catalyseur comprenant un support alumine et au moins un metal du groupe VIII choisi parmi le nickel et le cobalt, de préférence le nickel, ledit élément du groupe VIII étant utilisé en association avec au moins un metal du groupe VIB choisi parmi le molybdène et le tungstène, de préférence, le métal du groupe VIB est le molybdène. La teneur nickel dans le catalyseur d'hydroconversion est avantageusement comprise entre 0,5 à 10 % exprimée en poids d'oxyde de nickel (NiO) et de préférence entre 1 à 6 % poids et la teneur en molybdène est avantageusement comprise entre 1 et 30 % exprimée en poids de trioxyde de molybdène (MoO₃), et de préférence entre 4 et 20 % poids. Ce catalyseur est utilisé sous forme d'extrudés ou de billes. Le catalyseur utilisé dans l'étape c) d'hydroconversion est identique ou différent de celui mis en oeuvre dans l'étape a) d'hydroconversion. Avantageusement, le catalyseur mis en oeuvre dans le ou les réacteurs de l'étape c) d'hydroconversion peut également être un catalyseur plus adapté à l'hydroconversion de coupes résiduelles issues de l'étape a) d'hydroconversion.

Un type de catalyseur dit "slurry" selon la terminologie anglo-saxonne ou catalyseur entraîné peut être utilisé dans le procédé selon l'invention. Ledit catalyseur slurry présente une granulométrie et une densité adaptées à son entraînement. On entend par entraînement du catalyseur dispersé, sa mise en circulation dans le ou les réacteurs triphasiques par les flux liquides, ledit deuxième catalyseur circulant du bas vers le haut, avec la charge, dans le(s)dit(s) réacteurs triphasiques, et étant soutiré du ou desdits réacteurs triphasiques avec l'effluent liquide produit.

Dans une des mises en oeuvre du procédé selon l'invention, chaque réacteur de l'étape c) d'hydroconversion peut utiliser un catalyseur différent adapté à la charge qui est envoyée à ce réacteur. Dans une des mises en oeuvre du procédé selon l'invention, plusieurs types de catalyseurs peuvent être utilisés dans chaque réacteur.

Pour chaque réacteur, le taux de remplacement du catalyseur d'hydroconversion usé par du catalyseur frais est avantageusement compris entre 0,01 kilogramme et 10 kilogrammes par mètre cube de charge traitée, et de préférence entre 0,1 kilogramme et 3 kilogrammes par mètre cube de charge traitée. Ce soutirage et ce remplacement sont effectués à l'aide de dispositifs permettant avantageusement le fonctionnement continu de cette étape d'hydroconversion.

Conformément à l'invention, la vitesse spatiale horaire (VVH) par rapport au volume et au débit de charge liquide de l'ensemble du procédé pris dans des conditions standards de température et de pression est comprise entre 0,05 h⁻¹ et 0,09 h⁻¹ et de manière préférée entre 0,05 h⁻¹ et 0,08 h⁻¹.

Ces conditions du procédé de l'invention permettent d'améliorer simultanément le niveau de conversion et la stabilité des effluents liquides par un schéma de conversion des charges lourdes présentant un niveau thermique et un temps de séjour de la charge optimisés.

### Etape d) de fractionnement

L'effluent issu de l'étape c) d'hydroconversion peut avantageusement ensuite être soumis au moins en partie à une étape d) de fractionnement. Cette séparation comprend tout moyen de fractionnement connu par l'homme du métier. Ce fractionnement est réalisé par un ou plusieurs ballons de flash en série, de préférence par un enchaînement d'au moins deux ballons de flash successifs, de manière préférée par une ou plusieurs colonnes de strippage à la vapeur et/ou à l'hydrogène, de manière plus préférée par une colonne de distillation atmosphérique, de manière plus préférée par une colonne de distillation atmosphérique et une colonne sous vide sur le résidu atmosphérique, de manière encore plus préférée par un ou plusieurs ballons de flash, une colonne de distillation atmosphérique et une colonne sous vide sur le résidu atmosphérique. Ce fractionnement peut également être réalisé par une combinaison des différents moyens de séparation décrits ci-dessus.

L'étape de fractionnement est réalisée avec l'objectif de séparer les effluents à différents points de coupe et avantageusement d'obtenir au moins une fraction liquide lourde appelée résidu sous vide non converti bouillant majoritairement à une température supérieure à 300°C, de préférence supérieure à 500°C et de manière préférée supérieur e à 540°C.

### DESCRIPTION DE LA FIGURE

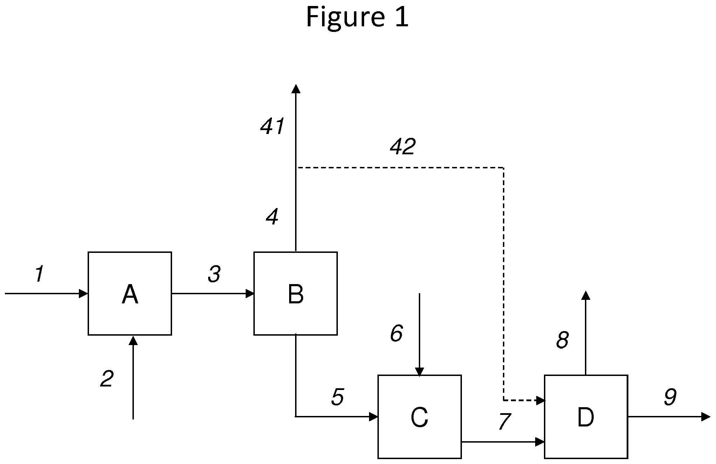

La figure 1 représente schématiquement le procédé selon l'invention dans le cas où l'étape b) de séparation est mise en oeuvre.

La charge est envoyée via la conduite (1) dans une section d'hydroconversion (A) à haute pression d'hydrogène opérant préférentiellement en lit bouillonnant.

(A) représente l'étape a) d'hydroconversion de la charge (1) en présence d'hydrogène, l'hydrogène arrivant par la conduite (2). L'étape a) d'hydroconversion peut être composée d'un ou de plusieurs réacteurs disposés en parallèle et/ou en série.

L'effluent de la section d'hydroconversion (A) est envoyé via la conduite (3), vers la section de séparation (B).

La fraction liquide lourde issue de la section de séparation (B) est envoyée vers l'étape c) d'hydroconversion représentée par la section (C) via la conduite (5) tandis que l'effluent léger est extrait de la séparation (B) par la conduite (4). Ce dernier peut partiellement ou en totalité être envoyé vers la section de fractionnement (D) par la conduite (42) et/ou partiellement ou en totalité dirigé vers une autre opération unitaire via la conduite (41).

L'étape c) d'hydroconversion (C) est composée d'un ou plusieurs réacteurs disposés en parallèle et/ou en série. La conduite (6) représente l'injection d'hydrogène dans l'étape c) d'hydroconversion. L'effluent de l'étape c) d'hydroconversion (C) peut être envoyé en totalité vers la section de fractionnement (D) via la conduite 7 pour être fractionné en plusieurs coupes. Dans ce schéma uniquement deux coupes sont représentés, une coupe légère (8) et une coupe lourde (9).

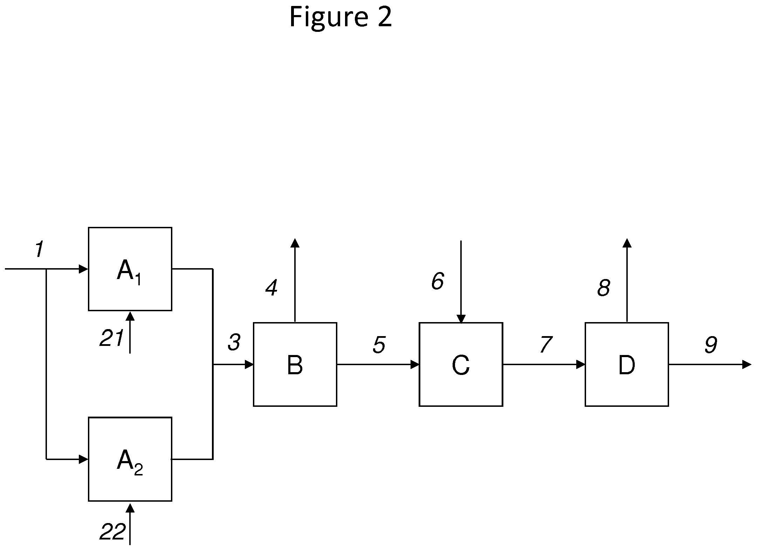

La figure 2 illustre l'invention dans un mode de réalisation préféré.

La charge est envoyée via la conduite (1) dans l'étape a) d'hydroconversion (section A) qui est composé de plusieurs plusieurs réacteurs disposés en série et/ou en parallèle et de manière préférée composé par deux réacteurs opérant en lit bouillonnant (A₁ et A₂) disposés en parallèle et opérant sous hydrogène (conduites 21 et 22 respectivement).

Les effluents obtenus à l'issue de la section d'hydroconversion (A) sont combinés et envoyés via la conduite (3) vers la section de séparation (B). Dans la section de séparation (B), les conditions sont généralement choisies de manière à obtenir deux fractions liquides, une fraction dite légère (4), et une fraction dite lourde (5), par tout moyen de séparation connu de l'homme du métier, de préférence sans colonnes de distillation atmosphérique et sous vide intermédiaires, de manière préférée par un strippage, de manière plus préférée par un enchainement de ballons de flash et de manière encore plus préférée par un seul ballon de flash.

La fraction liquide lourde en sortie de la section de séparation est ensuite envoyée via la conduite (5) dans la section d'hydroconversion (C) composée par un ou plusieurs réacteurs disposés en parallèle et/ou en série et d'une manière préférée composée d'un seul réacteur à haute pression d'hydrogène (6) opérant en lit bouillonnant.

Dans la section de fractionnement (D), les conditions sont généralement choisies de manière à obtenir au moins deux fractions liquides, une fraction dite légère (8), et une fraction dite lourde (9), de préférence à l'aide d'un ensemble de colonnes de distillation atmosphérique et sous vide.

Les exemples suivants illustrent l'invention sans en limiter la portée.

### EXEMPLES

### Charge

La charge lourde est un résidu sous vide (RSV) provenant d'un brut Oural et dont les principales caractéristiques sont présentées dans le tableau 1 ci-après.

**Tableau 1 : composition de la charge du procédé**

| Charge de l'étape | | A |
|---|---|---|
| Charge | | RSV Oural |
| Densité | | 1,0165 |
| Viscosité à 100 °C | cSt | 880 |
| Carbone Conradson | %pds | 17,0 |
| C7 Asphaltenes | %pds | 5,5 |
| C5 Asphaltenes | %pds | 10,9 |
| Nickel + Vanadium | ppm | 254 |
| Azote | ppm | 6150 |
| Soufre | %pds | 2,715 |

Cette charge lourde RSV est la même charge fraîche pour les différents exemples.

### EXEMPLE 1 (comparatif) : Schéma classique à haute vitesse spatiale horaire (VVH global = 0,3 h⁻¹) et à haute température

Dans cet exemple, on illustre l'état de l'art dans un schéma de procédé avec deux réacteurs en lit bouillonnant disposés en série, opérés à haute vitesse spatiale horaire (VVH) et à haute température et avec une section de séparation.

### Section a) d'hydroconversion

La charge fraîche du tableau 1 est envoyée en totalité dans une section d'hydroconversion (A) en présence d'hydrogène. Ladite section comprenant un réacteur triphasique contenant un catalyseur d'hydroconversion NiMo/alumine présentant une teneur en NiO de 4 % poids et une teneur en MoO₃ de 9 % poids, les pourcentages étant exprimés par rapport à la masse totale du catalyseur. La section fonctionne en lit bouillonnant à courant ascendant de liquide et de gaz.

Les conditions appliquées dans la section d'hydroconversion (A) sont présentées dans le tableau 2.

**Tableau 2 : conditions opératoires**

| Section | | A |
|---|---|---|
| P totale | MPa | 16 |
| Température | °C | 430 |
| Quantité d'hydrogène | Nm³/m³ | 640 |

Ces conditions opératoires permettent d'obtenir un effluent liquide à teneur réduite en carbone Conradson, en métaux et en soufre.

### Section de séparation

L'effluent liquide hydroconverti est ensuite envoyé dans une section de séparation (B) composé par un seul séparateur gaz / liquide fonctionnant à la pression et à la température des réacteurs de la première section d'hydroconversion (A). Une fraction dite légère et une fraction dite lourde sont ainsi séparées. La fraction dite légère est majoritairement composée par des molécules à point d'ébullition inférieur à 350°C et la fraction dite lourde est majoritairement composée par des molécules d'hydrocarbures bouillant à une température supérieure à 350°C.

### Section c) d'hydroconversion

La caractérisation de la fraction lourde envoyée vers la deuxième section d'hydroconversion (C) est présentée dans le tableau 3.

**Tableau 3 : composition de la charge de la section b) d'hydroconversion en lit bouillonnant (C)**

| Charge de l'étape | | C |
|---|---|---|
| Charge | | Fraction lourde |
| Densité | | 0,9742 |
| Carbone Conradson | %pds | 11,9 |
| C₇ Asphaltenes | %pds | 5,2 |
| C₅ Asphaltenes | %pds | 5,2 |
| Nickel + Vanadium | ppm | 104,4 |
| Azote | ppm | 5890 |
| Soufre | %pds | 1,2601 |

Dans ce schéma de référence, la fraction lourde (5) est envoyée seule et en totalité dans une deuxième section d'hydroconversion (C) en présence d'hydrogène (6). Ladite section comprend un réacteur triphasique contenant un catalyseur d'hydroconversion NiMo/alumine présentant une teneur en NiO de 4 % poids et une teneur en MoO₃ de 9 % poids, les pourcentages étant exprimés par rapport à la masse totale du catalyseur. La section fonctionne en lit bouillonnant à courant ascendant de liquide et de gaz.

Les conditions appliquées dans la section d'hydroconversion (C) sont présentées dans le tableau 4.

**Tableau 4 : conditions opératoires**

| Section | | C |
|---|---|---|
| P totale | MPa | 15,6 |
| Température | °C | 430 |
| Quantité d'hydrogène | Nm³/m³ | 420 |

### Section de fractionnement

L'effluent de la section d'hydroconversion (C) est envoyé dans une section de fractionnement (D) composée par une distillation atmosphérique de laquelle on récupère une fraction légère (8) bouillant à une température essentiellement inférieure à 350 °C et une fraction lourde résidu atmosphérique (RA) non converti bouillant à une température essentiellement supérieure à 350°C dont les rendements par rapport à la charge fraiche et la qualité sont donnés dans le tableau 5 ci-dessous.

**Tableau 5 : rendements et qualités des effluents de la section de fractionnement**

| Fraction | | **Résidu Atmosphérique non converti** |
|---|---|---|
| Rendement par rapport à la charge fraîche (1) | %pds | 58,4 |
| Densité | | 0,9678 |
| Carbone Conradson | %pds | 9,55 |
| C₇ Asphaltenes | %pds | 4,0 |
| Nickel + Vanadium | ppm | 41,5 |
| Azote | ppm | 5885 |
| Soufre | %pds | 0,7849 |
| Sédiments (IP-375) | %pds | 0,54 |

### Performances globales

Avec ce schéma classique, pour une vitesse spatiale horaire (VVH) globale de 0,3 h⁻¹, la conversion totale de la coupe lourde 540°C+ est de 75,4% poids et la teneur en sédiments (IP-375) dans la coupe lourde résiduelle RA non convertie est de 0,54 %pds.

### EXEMPLE 2 (selon l'invention) : Schéma selon l'invention à faible vitesse spatiale horaire (VVH global = 0,089 h⁻¹) et à faible température

Dans cet exemple, on illustre la présente invention dans un schéma de procédé avec deux réacteurs en lit bouillonnant disposés en série, opérés à faible vitesse spatiale horaire (VVH) et à faible température et avec une section de séparation.

### Section a) d'hydroconversion

La charge fraîche du tableau 1 est envoyée en totalité dans une section d'hydroconversion (A) en présence d'hydrogène, ladite étape comprenant un réacteur triphasique contenant un catalyseur d'hydroconversion NiMo/alumine présentant une teneur en NiO de 4 % poids et une teneur en MoO₃ de 9 % poids, les pourcentages étant exprimés par rapport à la masse totale du catalyseur. La section fonctionne en lit bouillonnant à courant ascendant de liquide et de gaz.

Les conditions appliquées dans l'étape d'hydroconversion (A) sont présentées dans le tableau 6.

**Tableau 6 : conditions opératoires**

| Section | | A |
|---|---|---|
| P totale | MPa | 16 |
| Température | °C | 410 |
| Quantité d'hydrogène | Nm³/m³ | 1000 |

Ces conditions opératoires permettent d'obtenir un effluent liquide à teneur réduite en carbone Conradson, en métaux et en soufre.

### Section de séparation

L'effluent liquide hydroconverti est ensuite envoyé dans une section de séparation intersections (B) composée par un seul séparateur gaz / liquide fonctionnant à la pression et température des réacteurs de la première section d'hydroconversion. Une fraction légère et une fraction dite lourde sont ainsi séparées. La fraction légère est majoritairement composée par des molécules à point d'ébullition inférieur à 350°C et la fraction dite lourde est majoritairement composée par des molécules d'hydrocarbures bouillant à une température supérieure à 350°C.

### Section c) hvdroconversion

La caractérisation de la fraction lourde envoyée vers la deuxième section d'hydroconversion (C) est présentée dans le tableau 7.

**Tableau 7 : composition de la charge de la section d'hydroconversion en lit bouillonnant (C)**

| Charge de l'étape | | C |
|---|---|---|
| Charge | | Fraction lourde |
| Densité | | 0,9665 |
| Carbone Conradson | %pds | 10,57 |
| C₇ Asphaltenes | %pds | 3,6 |
| C₅ Asphaltenes | %pds | 4,2 |
| Nickel + Vanadium | ppm | 65,7 |
| Azote | ppm | 5680 |
| Soufre | %pds | 1,030 |

Dans ce schéma selon la présente invention, la fraction lourde (5) est envoyée seule et en totalité dans une deuxième section d'hydroconversion (C) en présence d'hydrogène (6), ladite étape comprenant un réacteur triphasique contenant un catalyseur d'hydroconversion NiMo/alumine présentant une teneur en NiO de 4 % poids et une teneur en MoO₃ de 9 % poids, les pourcentages étant exprimés par rapport à la masse totale du catalyseur. La section fonctionne en lit bouillonnant à courant ascendant de liquide et de gaz.

Les conditions appliquées dans l'étape d'hydroconversion (C) sont présentées dans le tableau 8.

**Tableau 8 : conditions opératoires**

| Section | | C |
|---|---|---|
| P totale | MPa | 15,6 |
| Température | °C | 410 |
| Quantité d'hydrogène | Nm³/m³ | 560 |

### Section de fractionnement

L'effluent de l'étape d'hydroconversion (C) est envoyé dans une section de fractionnement (D) composé par une distillation atmosphérique de laquelle on récupère une fraction légère (8) bouillant à une température essentiellement inférieure à 350 °C et une fraction lourde résidu atmosphérique (RA) non converti bouillant à une température essentiellement supérieure à 350°C dont les rendements par rapport à la charge fraiche et la qualité sont donnés dans le tableau 9 ci-dessous.

**Tableau 9: rendements et qualités des effluents de la section de fractionnement**

| Fraction | | **Résidu Atmosphérique non converti** |
|---|---|---|
| Rendement par rapport à la charge fraîche (1) | %pds | 54,0 |
| Densité | | 0,9590 |
| Carbone Conradson | %pds | 7,42 |
| C₇ Asphaltenes | %pds | 2,1 |
| Nickel + Vanadium | ppm | 10,3 |
| Azote | ppm | 5305 |
| Soufre | %pds | 0,4684 |
| Sédiments (IP-375) | %pds | 0,15 |

### Performances globales

Avec ce schéma selon l'invention à VVH globale = 0,089 h⁻¹ la conversion totale de la coupe lourde 540°C+ est de 75,3 % poids et la teneur en sédiments (IP-375) dans la coupe lourde résiduelle RA non convertie est seulement de 0,15 % poids. Par rapport au schéma classique traité dans exemple 1, les performances de purification sont supérieures pour un niveau de conversion de la coupe lourde 540°C+ quasiment identique. La stabili té des effluents liquides de conversion est très nettement améliorée.

## Revendications

1. Procédé de conversion d'une charge lourde d'hydrocarbures, ledit procédé comprenant les étapes suivantes :
a) une étape d'hydroconversion de la charge lourde d'hydrocarbures en présence d'hydrogène dans au moins un ou plusieurs réacteurs triphasiques disposés en série ou en parallèle, contenant au moins un catalyseur d'hydroconversion, l'étape a) d'hydroconversion étant mise en oeuvre sous une pression absolue comprise entre 2 et 35 MPa, une température comprise entre 300 et 550 °C, et sous une quantité d'hydrogène mélangée avec la charge comprise entre 50 et 5000 Normaux mètres cube (Nm³) par mètre cube (m³) de charge, de manière à obtenir un effluent liquide à teneur réduite en Carbone Conradson, en métaux, en soufre et en azote,
b) une ou plusieurs étapes optionnelles de séparation de l'effluent issu de l'étape a) permettant d'obtenir au moins une fraction liquide légère bouillant à une température inférieure à 350°C et une fraction liquide lourde bouillant à une température supérieure à 350°C,
c) une étape d'hydroconversion de l'effluent liquide issu de l'étape d'hydroconversion a) dans le cas où l'étape b) de séparation n'est pas mise en oeuvre, ou de la fraction liquide lourde issue de l'étape de séparation b) lorsque ladite étape b) est mise en oeuvre, en présence d'hydrogène dans au moins un ou plusieurs réacteurs triphasiques disposés en série ou en parallèle, contenant au moins un catalyseur d'hydroconversion, l'étape c) d'hydroconversion étant mise en oeuvre sous une pression absolue comprise entre 2 et 38 MPa, à une température comprise entre 300 et 550 °C, et sous une quantité d'hydrogène comprise entre 50 et 5000 normaux mètres cube (Nm³) par mètre cube (m³) de charge liquide pris dans des conditions standards de température et pression,
procédé dans lequel la vitesse spatiale horaire globale mise en oeuvre est comprise entre 0,05 et 0,09 h⁻¹, et dans lequel
le catalyseur d'hydroconversion de l'étape a) et de l'étape c) est un catalyseur comprenant un support alumine et au moins un métal du groupe VIII choisi parmi le nickel et le cobalt, ledit élément du groupe VIII étant utilisé en association avec au moins un métal du groupe VIB choisi parmi le molybdène et le tungstène, et est utilisé sous forme d'extrudés ou de billes.

2. Procédé selon la revendication 1 dans lequel l'effluent issu de l'étape c) d'hydroconversion est soumis au moins en partie à une ou plusieurs étapes d) de fractionnement permettant de séparer les effluents à différents points de coupe.

3. Procédé selon l'une des revendications précédentes dans lequel la charge contient des fractions d'hydrocarbures dont au moins 80 % poids ont une température d'ébullition supérieure à 300°C, des résidus atmosphériques et/ou des résidus sous vide, des résidus atmosphérique et/ou sous vide issues de l'hydrotraitement, de l'hydrocraquage et/ou de l'hydroconversion, des distillats sous vide frais ou raffinés, des coupes provenant d'une unité de craquage comme le FCC, le cokage ou la viscoréduction, des coupes aromatiques extraites d'une unité de production de lubrifiants, des huiles désasphaltées issues d'une unité de désasphaltage, des asphaltes issus d'une unité de désasphaltage ou des charges d'hydrocarbures similaires, ou une combinaison de ces charges fraiches et/ou des effluents raffinés ou de résidus ou distillats de liquéfaction directe de charbon, ou des résidus ou distillats de pyrolyse de charbon ou d'huiles de schiste, ou encore une fraction résiduelle issue de la liquéfaction directe de la biomasse lignocellulosique seule ou en mélange avec du charbon et/ou une fraction pétrolière fraîche et/ou raffinée.

4. Procédé selon l'une des revendications précédentes dans lequel l'étape a) ou l'étape c) est réalisée sous une pression absolue comprise entre 5 et 25 MPa, à une température comprise entre 350 et 500°C.

5. Procédé selon l'une des revendications précédentes dans lequel, la teneur en nickel dans le catalyseur d'hydroconversion de l'étape a) est comprise entre 0,5 et 10 % exprimée en poids d'oxyde de nickel (NiO) et la teneur en molybdène est comprise entre 1 et 30 % exprimée en poids de trioxyde de molybdène (MoO3).

6. Procédé selon l'une des revendications précédentes dans lequel, l'étape b) de séparation est réalisée par un ou plusieurs ballons de flash en série.

7. Procédé selon l'une des revendications 2 à 6, dans lequel l'effluent issu de l'étape c) d'hydroconversion est soumis au moins en partie à une ou plusieurs étapes d) de fractionnement permettant de séparer les effluents à différents points de coupe, et dans lequel la fraction liquide légère séparée de l'étape b) est envoyée dans l'étape d) de fractionnement.

## Patentansprüche

1. Verfahren zur Umwandlung einer schweren Kohlenwasserstoffcharge, wobei das Verfahren die folgenden Schritte umfasst:
a) einen Schritt der Hydroumwandlung der schweren Kohlenwasserstoffcharge im Beisein von Wasserstoff in mindestens einem oder mehreren Dreiphasenreaktoren, die in Serie oder parallel angeordnet sind, die mindestens einen Katalysator zur Hydroumwandlung enthalten, wobei der Schritt a) der Hydroumwandlung unter einem absoluten Druck zwischen 2 und 35 MPa, einer Temperatur zwischen 300 und 550 °C und einer Wasserstoffmenge im Gemisch mit der Charge zwischen 50 und 5000 Normkubikmeter (Nm³) pro Kubikmeter (m³) Charge eingesetzt wird, um einen flüssigen Abfluss mit verringertem Gehalt an Conradson-Kohlenstoff, Metallen, Schwefel und Stickstoff zu erhalten,
b) einen oder mehrere optionale Schritte der Trennung des aus Schritt a) stammenden Abflusses, die es ermöglichen, mindestens eine bei einer Temperatur unter 350 °C siedende leichte flüssige Fraktion und eine bei einer Temperatur über 350 °C siedende schwere flüssige Fraktion zu erhalten,
c) einen Schritt der Hydroumwandlung des flüssigen Abflusses aus dem Schritt der Hydroumwandlung a), falls der Trennungsschritt b) nicht eingesetzt wird, oder der schweren flüssigen Fraktion aus dem Trennungsschritt b), wenn der Schritt b) eingesetzt wird, im Beisein von Wasserstoff in mindestens einem oder mehreren Dreiphasenreaktoren, die in Serie oder parallel angeordnet sind, die mindestens einen Katalysator zur Hydroumwandlung enthalten, wobei der Schritt c) der Hydroumwandlung unter einem absoluten Druck zwischen 2 und 38 MPa, einer Temperatur zwischen 300 und 550 °C und einer Wasserstoffmenge zwischen 50 und 5000 Normkubikmeter (Nm³) pro Kubikmeter (m³) flüssiger Charge unter Standard-Temperatur- und Druckbedingungen eingesetzt wird,
wobei bei dem Verfahren die eingesetzte globale Stundenraumgeschwindigkeit zwischen 0,05 und 0,09 h⁻¹ beträgt, und
der Katalysator zur Hydroumwandlung aus Schritt a)oder Schritt c) ein Katalysator ist, umfassend einen Aluminiumoxidträger und mindestens ein Metall der Gruppe VIII, ausgewählt unter Nickel und Kobalt, wobei das Element der Gruppe VIII in Verbindung mit mindestens einem Metall der Gruppe VIB, ausgewählt unter Molybdän und Wolfram, und in Form von Extrudat oder Kugeln verwendet wird.

2. Verfahren nach Anspruch 1, bei dem der aus dem Schritt c) der Hydroumwandlung stammende Abfluss zumindest teilweise einem oder mehreren Fraktionierungsschritten d) unterzogen wird, die es ermöglichen, die Abflüsse an verschiedenen Schnittstellen zu trennen.

3. Verfahren nach einem der vorhergehenden Ansprüche, bei dem die Charge Kohlenwasserstofffraktionen, bei denen mindestens 80 Gew.-% eine Siedetemperatur über 300 °C haben, atmosphärische Reststoffe und/oder Reststoffe unter Vakuum, atmosphärische Reststoffe und/oder Reststoffe unter Vakuum aus der Hydrobehandlung, dem Hydrocracken und/oder der Hydroumwandlung, frische oder raffinierte Destillate unter Vakuum, Schnitte, die von einer Crackeinheit kommen, wie FCC, Verkokung oder Visbreaking, aromatische Schnitte, die aus einer Einheit zur Erzeugung von Schmiermitteln extrahiert wurden, entasphaltierte Öle aus einer Entasphaltierungseinheit, Apshalte aus einer Entasphaltierungseinheit oder ähnliche Kohlenwasserstoffchargen oder eine Kombination dieser frischen Chargen und/oder der raffinierten Abflüsse oder von Reststoffen oder Destillaten aus der direkten Kohleverflüssigung oder Reststoffe oder Destillate aus der Pyrolyse von Kohle oder Schieferölen, oder auch eine Restfraktion aus der direkten Verflüssigung der Lignozellulose-Biomasse allein oder im Gemisch mit Kohle und/oder eine frische und/oder raffinierte Erdölfraktion enthält.

4. Verfahren nach einem der vorhergehenden Ansprüche, bei dem der Schritt a) oder der Schritt c) unter einem absoluten Druck zwischen 5 und 25 MPa und einer Temperatur zwischen 350 und 500 °C durchgeführt wird.

5. Verfahren nach einem der vorhergehenden Ansprüche, bei dem der Nickelgehalt in dem Katalysator zur Hydroumwandlung aus Schritt a) zwischen 0,5 und 10 %, ausgedrückt in Gewicht von Nickeloxid (NiO), und der Molybdängehalt zwischen 1 und 30 %, ausgedrückt in Gewicht von Molybdäntrioxid (MoO₃), beträgt.

6. Verfahren nach einem der vorhergehenden Ansprüche, bei dem der Trennungsschritt b) durch einen oder mehreren Flash-Ballons in Serie durchgeführt wird.

7. Verfahren nach einem der Ansprüche 2 bis 6, bei dem der Abfluss aus dem Schritt c) der Hydroumwandlung zumindest teilweise einem oder mehreren Fraktionierungsschritten d) unterzogen wird, die es ermöglichen, die Abflüssen an verschiedenen Schnittstellen zu trennen, und bei dem die getrennte leichte flüssige Fraktion aus Schritt b) in den Fraktionierungsschritt d) geschickt wird.

## Claims

1. A process for the conversion of a heavy hydrocarbon feed, said process comprising the following steps:
a) a step for hydroconversion of the heavy hydrocarbon feed in the presence of hydrogen in at least one or more three-phase reactors disposed in series or in parallel, containing at least one hydroconversion catalyst, the hydroconversion step a) being carried out under an absolute pressure in the range 2 to 35 MPa, a temperature in the range 300°C to 550°C, and under a quantity of hydrogen mixed with the feed in the range 50 to 5000 normal cubic metres (Nm³) per cubic metre (m³) of feed, in a manner such as to obtain a liquid effluent with a reduced Conradson carbon, metals, sulphur and nitrogen content,
b) one or more optional steps for separating the effluent obtained from step a) in order to obtain at least one light liquid fraction boiling at a temperature of less than 350°C and a heavy liquid fraction boiling at a temperature of more than 350°C,
c) a step for hydroconversion of the liquid effluent obtained from the hydroconversion step a) in the case in which the separation step b) is not carried out, or of the heavy liquid fraction obtained from the separation step b) when said step b) is carried out, in the presence of hydrogen in at least one or more three-phase reactors disposed in series or in parallel, containing at least one hydroconversion catalyst, the hydroconversion step c) being carried out under an absolute pressure in the range 2 to 38 MPa, at a temperature in the range 300°C to 550°C, and under a quantity of hydrogen in the range 50 to 5000 normal cubic metres (Nm³) per cubic metre (m³) of liquid feed under standard temperature and pressure conditions,
in which process the overall hourly space velocity employed is in the range 0.05 to 0.09 h⁻¹, and in which
the hydroconversion catalyst of step a) and step c) is a catalyst comprising an alumina support and at least one metal from group VIII selected from nickel and cobalt, said element from group VIII being used in association with at least one metal from group VIB selected from molybdenum and tungsten, and is used in the form of extrudates or beads.

2. The process as claimed in claim 1, in which at least a portion of the effluent obtained from the hydroconversion step c) undergoes one or more steps d) for fractionation in order to separate the effluents with different cut points.

3. The process as claimed in one of the preceding claims, in which the feed contains hydrocarbon fractions wherein at least 80% by weight have a boiling temperature of more than 300°C, atmospheric residues and/or vacuum residues, atmospheric residues and/or vacuum residues obtained from hydrotreatment, hydrocracking and/or hydroconversion, fresh or refined vacuum distillates, cuts from a cracking unit such as FCC, coking or visbreaking, aromatic cuts extracted from a lubricant production unit, deasphalted oils obtained from a deasphalting unit, asphalts obtained from a deasphalting unit or similar hydrocarbon feeds, or a combination of these fresh feeds and/or refined effluents, or residues or distillates obtained from the direct liquefaction of coal, or residues or distillates obtained from coal pyrolysis or from shale oils, or in fact a residual fraction obtained from the direct liquefaction of lignocellulosic biomass alone or as a mixture with coal and/or a fresh and/or refined oil fraction.

4. The process as claimed in one of the preceding claims, in which step a) or step c) is carried out at an absolute pressure in the range 5 to 25 MPa, at a temperature in the range 350°C to 500°C.

5. The process as claimed in one of the preceding claims, in which the quantity of nickel in the hydroconversion catalyst of step a) is in the range 0.5% to 10%, expressed as the weight of nickel oxide (NiO), and the molybdenum content is in the range 1% to 30%, expressed as the weight of molybdenum trioxide (MoO₃).

6. The process as claimed in one of the preceding claims, in which the separation step b) is carried out using one or more flash drums in series.

7. The process as claimed in one of claims 2 to 6, in which the effluent obtained from the hydroconversion step c) undergoes one or more steps d) for fractionation in order to separate the effluents with different cut points, and in which the light liquid fraction separated in step b) is sent to the fractionation step d).
